# EUROPÄISCHE PATENTANMELDUNG

(11) **EP 3 086 073 A1**
(43) Veröffentlichungstag der Anmeldung: **26.10.2016**
(21) Anmeldenummer: 16000671.4
(22) Anmeldetag: 19.03.2016
(51) Int. Cl.: F28F 9/00, F02M 35/16, F02M 35/10, F02B 61/04, F02B 75/06, F02B 29/04, F28F 9/02

(54) **SAUGANLAGE MIT INTEGRIERTEM LADELUFTKÜHLER**

(30) Priorität: 21.04.2015 DE 102015005047
(71) Anmelder: Neander Motors AG, 24143 Kiel (DE)
(72) Erfinder: Brüstle, Claus, D-74228 Nordheim (DE)

(57) **Zusammenfassung**

Sauganlage (9) mit einem integrierten Ladeluftkühler (16) für eine Brennkraftmaschine, wobei die einen Anlagenbehälter aufweisende Sauganlage einen ersten Anschlusskanäle enthaltenden Behälterabschnitt (15) besitzt, der mit einem zweiten den Ladeluftkühler aufnehmenden Behälterabschnitt (17) verbunden ist, welcher zweite Behälterabschnitt (17) an einen die Luft zum Ladeluftkühler führenden dritten Behälterabschnitt (18) angeschlossen ist, wobei die Brennkraftmaschine als Außenbordmotor mit liegende Zylinder ausgebildet ist, wobei der erste Behälterabschnitt, der zweite Behälterabschnitt und der dritte Behälterabschnitt aus einem Stück aus Leichtmetall zu einer Sauganlagenbaueinheit (19) zusammengefasst sind, welcher dritte Behälterabschnitt (18) als ein vom zweiten Behälter aus in Richtung Lader sich verjüngender Rohrkörper (20) dargestellt ist.

## Beschreibung

Die Erfindung bezieht sich auf eine Sauganlage mit einem integrierten Ladeluftkühler für eine mit einer Abgasturboladereinrichtung versehene Brennkraftmaschine der Hubkolbenbauart.

Es ist ein Wärmetauscher bekannt, EP 2 532 855 A2, der an einem die Ansaugluft führenden Gehäuse, vorzugsweise an einem Ansaugmodul befestigt ist. Der Verbrennungsmotor umfasst einen ersten und einen zweiten Kühlmittelkasten, zwischen denen sich ein Rippen-Rohr-Block erstreckt, wobei die Rohre des Rippen-Rohr-Blocks in jeweils einen Boden münden und jeweils ein Boden dicht mit dem jeweiligen Kühlmittelkasten verbunden ist. Der erste und der zweite Kühlmittelkasten tragen den Wärmetauscher an einem die Ansaugluft führenden Gehäuse, an dem das Ansaugmodul des Verbrennungsmotors befestigt ist.

Die DE 10 2010 063 324 A1 befasst sich mit einer Vorrichtung zur Kühlung von Ladeluft eines Verbrennungsmotors. Diese Vorrichtung weist eine Mehrzahl von zweiten Kühlmittelrohren zum Führen eines zweiten Kühlmittels auf, wobei die ersten Kühlmittelrohre entlang einer Längserstreckungsrichtung der Vorrichtung verlaufen. Und eine Mehrzahl der ersten Kühlmittelrohre ist bezügliche der Mehrzahl der zweiten Kühlmittel in einer Quererstreckungsrichtung angeordnet.

Aus der DE 10 2012 204 211 A1 geht eine Ladeluftkühleinrichtung für eine Brennkraftmaschine hervor, die über ein Gehäuse mit einem darin angeordneten Ladeluftkühler verfügt. Das Gehäuse, bestehend aus Kunststoff, weist mehrere Gehäuseabschnitte auf, und zwar einen ersten Gehäuseabschnitt mit Ladeluftrohren, einen zweiten Gehäuseabschnitt zur Aufnahme des Ladeluftkühlers und einen dritten Gehäuseabschnitt für die Zuführung von Luft an den Ladeluftkühler. Die Konstruktion der Gehäuseabschnitte der Ladeluftkühleinrichtung verursacht erhebliche räumliche Ausdehnungen, die einer kompakten Anordnung der besagten Ladeluftkühleinrichtung bei Brennkraftmaschine mit begrenzten Bauraumverhältnissen entgegenstehen.

Gemäß der EP 2 696 054 A1 umfasst ein durch eine Brennkraftmaschine dargestellter Außenbordmotor ein Maschinengehäuse mit einem Zylinderkopf und einem Zylindergehäuse, in dem zwei aufrechte Kurbelwellen eines Kurbelwellensystems angeordnet sind. Die Kurbelwellen werden über Pleuel von in liegenden Zylindern arbeitenden Hubkolben betätigt. Zur Leistungs- und Verbrauchsoptimierung ist die Brennkraftmaschine mit einer Abgasturboladereinrichtung versehen, die an einer oberen Stirnwand des Maschinengehäuses befestigt ist.

Es ist Aufgabe der Erfindung eine Brennkraftmaschine, umfassend eine Sauganlage mit integriertem Ladeluftkühler, zu konzipieren, die durch eine gezielte geometrische und wirkungsgerechte Konstruktion sich mit geringem Raumanspruch an einem Maschinengehäuse der Brennkraftmaschine anfügen lässt und dazu noch leicht umsetzbar ist Überdies sollte aber auch sichergestellt werden, dass die Strahlwärme der Brennkraftmaschine von einem eine definierte Festigkeit aufweisenden Anlagenbehälter ohne weiteres aufgenommen wird.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung erzielten Vorteile sind darin zu sehen, dass die über einen integrierten Ladeluftkühler verfügende Sauganlage sich vorteilhaft d.h. unter dem Gesichtspunkt einer geometrischen und funktionalen Anordnung -Package- an die als Außenbordmotor wirkende Brennkraftmaschine der Hubkolbenbauart eingliedern lässt. Dies wird durch die Bauweise der Brennkraftmaschine unterstützt, die zwei liegende Hubkloben aufnehmende Zylinder besitzt. Letztere sind Bestandteil eines Maschinengehäuses mit einem Zylindergehäuse und einem Einlasskanäle aufweisenden Zylinderkopf, an welche Einlasskanäle die Sauganlage mit Anschlusskanälen herangeführt ist. Geschickt gelöst ist die mit dem Anlagebehälter versehene einfach darzustellende Sauganlage, welcher Anlagebehälter mit dem ersten die Anschlusskanäle tragenden Behälterabschnitt vereint ist. Der erste Behälterabschnitt ist vorbildlich mit dem zweiten den Ladeluftkühler aufnehmenden Behälterabschnitt verbunden, an den ein dritter die Luft zum Ladeluftkühler führender Behälterabschnitt angeschlossen ist. In dem Maschinengehäuse der besonders gestalteten Brennkraftmaschine sind ein aufrechtes Kurbelwellensystem mit zwei Kurbelwellen und liegende Zylinder untergebracht. Dabei ist die durch eine Turbine und einen Lader gebildete Abgasturboladereinrichtung lageoptimiert an der oberen Stirnseite des Maschinengehäuses angeordnet. Der erste Behälterabschnitt, der zweite Behälterabschnitt und der dritte Behälterabschnitt sind aus einem Stück aus Leichtmetall zu einer Sauganlagenbaueinheit zusammengefasst, die bezüglich Festigkeit und Aufnahme von Strahlwärme der Brennkraftmaschine hochrangige Eigenschaften besitzt. Darüber hinaus erweist sich der dritte Behälterabschnitt, der vom zweiten Behälterabschnitt als ein vom zweiten Behälterabschnitt aus in Richtung Lader sich verjüngender Rohrkörper dargestellt ist, als ausgezeichnete technische Lösung.

Hervorzuheben ist auch, dass die ersten und die zweiten Behälterabschnitte der Saugrohranlage in einer horizontalen Ebene gesehen zum einen mit der Innenseite mit relativ geringem Abstand an das Maschinengehäuse anschließen und zum anderen mit einer Außenseite benachbart einer Abdeckhaube des Außenbordmotors verläuft. Dies ermöglicht bei guter Wirkung der Sauganlage auch, dass sie in beengten Raumgegebenheiten z.B. eines Außenbordmotors, auf hervorragende Weise einsetzbar ist. Hierzu trägt auch bei, dass der Ladeluftkühler eine zylinderische Form aufweist, an die der zweite Behälterabschnitt angepasst ist, wobei eine Tiefe des ersten Zylinderabschnitts in der horizontalen Ebene gesehen annähernd dem Durchmesser des Ladeluftkühlers entspricht.

Ausgezeichnete Gestaltungswege sind, wenn der Anschlussbereich des Rohrkörpers an den zweiten Behälterabschnitt herangeführt ist sowie sich mit einer relativ großen Länge über eine wesentliche Höhe des besagten zweiten Behälterabschnitts erstreckt und außerdem der Körper mit einem Hüllabschnitt einen Luftzuführungsraum vor dem Ladeluftkühler überdeckt.

Beispielgebend ist zum einen, dass der Anschlussbereich des Rohrkörpers an den zweiten Behälterabschnitt in etwa die Form einer Ellipse aufweist, die über die Länge des Rohrkörpers betrachtet durch Querschnittsformänderung in einen kreisförmigen Endbereich übergeht. Zum anderen ist der Endbereich des Rohrkörpers nahe an den Austrittsbereich des Laders des Abgasturboladers herangeführt, wobei zwischen dem Endbereich des Rohrkörpers und dem Austrittsbereich des Laders eine elastische Manschette wirksam ist.

Schließlich wird eine vorzügliches technisches Konzept dadurch erreicht, wenn der zweite Behälterabschnitt benachbart von ersten und zweiten Endabschnitten des Ladeluftkühlers über nach Art von Bohrungen ausgebildete Endbereiche verfügt, in die Zylinderabschnitte des Ladeluftkühlers hineinragen. Dazu sind zwischen den Endbereichen und den Zylinderabschnitten Dichtkörper vorgesehen, welche Endbereiche mit Ausnehmungen zur Aufnahme der Dichtkörper versehen sind.

In der Zeichnung ist ein Ausführungsbeispiel dargestellt, das nachstehen näher beschrieben wird.

### Es zeigen

Fig. 1 eine schematische Schrägansicht einer als Außenbordmotor fungierenden Brennkraftmaschine mit einer einen Sauganlage,
Fig. 2 einen Schnitt durch die Sauganlage mit einem integrierten Ladeluftkühler,
Fig. 3 eine Ansicht in Pfeilrichtung A der Fig. 2,
Fig. 4 eine Einzelheit X der Fig. 2 in größerem Maßstab,
Fig. 5 eine Verbindung zwischen einem Endbereich eines Rohrkörpers der Sauganlage und einem Austrittsbereich eines Laders einer Abgasturboladereinrichtung,
Fig. 6 eine perspektivische Ansicht der Sauganlage gemäß Fig. 1.

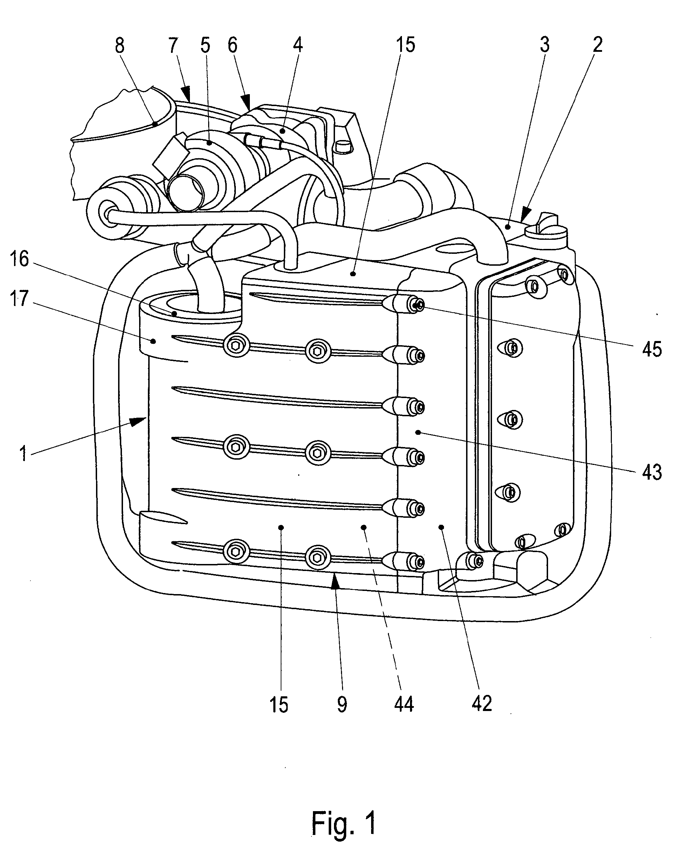

Eine Brennkraftmaschine 1 ist als Außenbormotor ausgebildet, der als Schiffsantrieb dient, wie es in der eingangs zitierten EP 2 696 054 A1 beschrieben und gezeigt ist. Die nach dem Dieselprinzip und mit Direkteinspritzung arbeitende Brennkraftmaschine 1 ist von der Hubkolbenbauart mit beispielsweise zwei Hubkolben aufnehmenden Zylindern, die Bestandteil eines Maschinengehäuses 2 mit einem Zylindergehäuse und einem Einlasskanäle aufweisenden Zylinderkopf. In dem Maschinengehäuse 2 sind zwei aufrechte stehende Kurbelwellen eines Kurbelwellensystems gelagert, wovon eine der Kurbelwellen unter Zwischenschaltung eines Getriebes mit einer Schiffsschraube zusammenwirkt. Die Kurbelwellen werden unter Vermittlung von zwei Pleueln je Hubkolben in Drehbewegung versetzt. An einer oberen Stirnseite 3 des Maschinengehäuses 2 ist eine eine Turbine 4 und einen Lader 5 aufweisende Abgasturboladereinrichtung 6 angeordnet. Und freie Enden der Kurbelwellen sind oberhalb der Stirnseite 3 mit Schwungrädern 7 und 8 -Fig. 1- versehen, die in der Höhe versetzt angeordnet sind und sich gegenseitig bereichsweise überdecken.

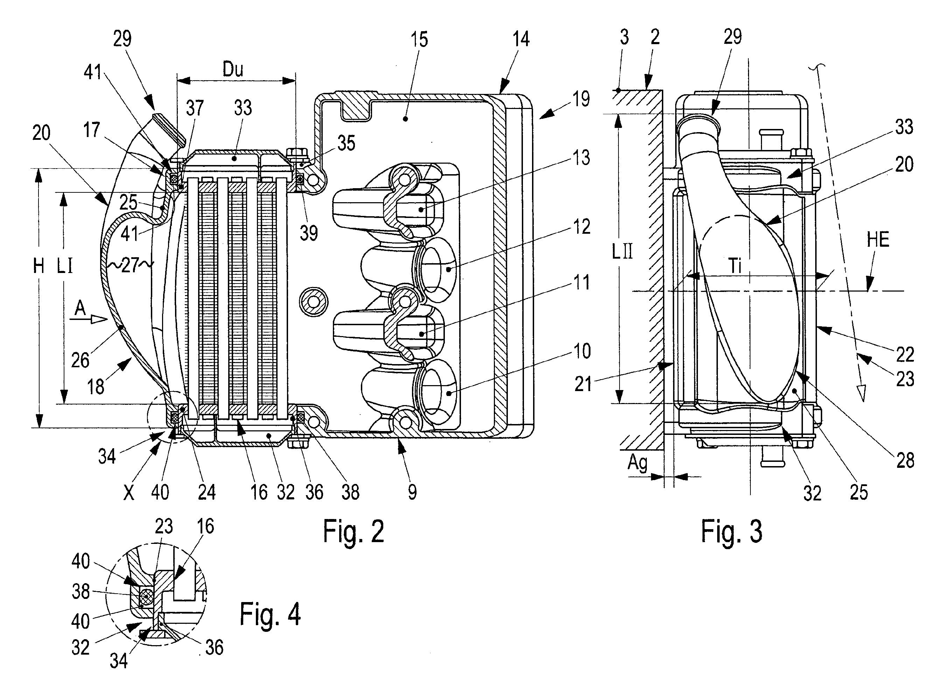

An die nicht gezeigten Einlasskanäle des Zylinderkopfs ist eine Sauganlage 9 mit Anschlusskanälen 10, 11, 12 und 13 eines Anlagebehälters 14 herangeführt. Der Anlagebehälter 14 setzt sich aus einem ersten zu den Einlasskanälen des Zylinderkopfs führenden die Anschlusskanäle 10, 11, 12 und 13 -zwei pro Zylinderkopf, weil zwei Einlassventile je Zylinderkopf- enthaltenden Behälterabschnitt 15 -Fig. 2-, einem zweiten einen Ladeluftkühler 16 aufnehmenden Behälterabschnitt 17 sowie einem dritten die Luft zum Ladeluftkühler 16 leitenden Behälterabschnitt 18. Die Behälterabschnitte 15, 17 und 18 sind aus einem Stück z.B. im Gießverfahren hergestellt und zu einer Sauganlagenbaueinheit 19 zusammengefasst; als Werkstoff für besagte Saugrohranlagenbaueinheit 19 eignet sich bspw. Leichtmetall. Der Dritte Behälterabschnitt 18 verläuft zwischen als ein vom zweiten Behälter 17 aus in Richtung Lader 5 sich verjüngender Rohrkörper 20.

Die ersten und die zweiten Behälterabschnitte 15 und 17 der Sauganlage 9 bzw. des Anlagebehälters 14 schließen in einer horizontalen Ebene HE gesehen zum einen mit einer Innenseite 21 mit relativ geringem Abstand Ag an das Maschinengehäuse 2 an. Zum anderen verläuft eine Außenseite 22 der Sauanlage benachbart einer Abdeckhabe 23 des Außenbordmotors bzw. der Brennkraftmaschine 1. Der Ladeluftkühler 16 weist zumindest abschnittsweise eine zylinderische Form 24 auf, an die der zweite Behälterabschnitt 17 angepasst ist. Dabei ist eine Tiefe Ti in der horizontalen Ebene HE gesehen annähernd an eine Durchmesser Du des Ladeluftkühlers 16 angeglichen ist.

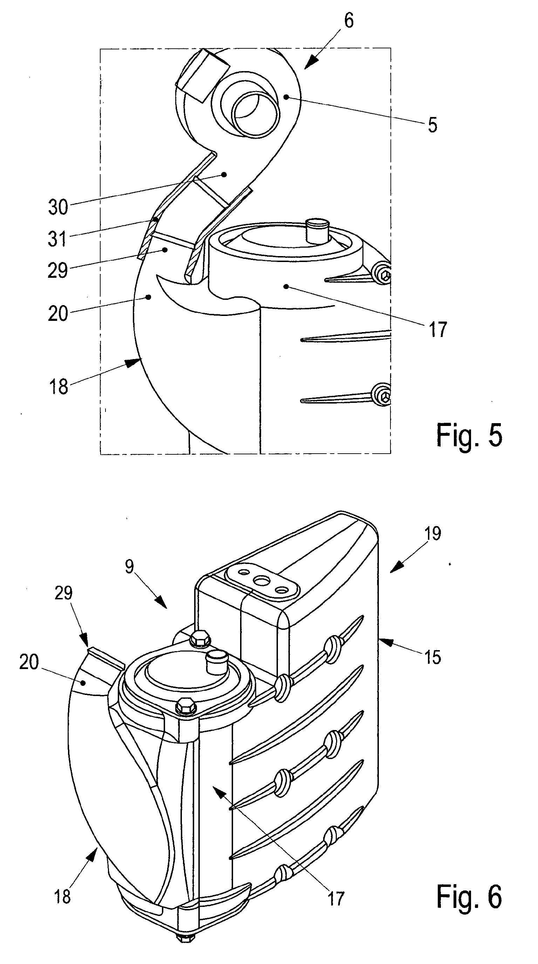

Ein Anschlussbereich 25 des Rohrkörpers 20 in Gestalt des dritten Behälterabschnitts 18 ist an den zweiten Behälterabschnitt 17 herangeführt, und dieser Anschlussbereich 25 erstreckt sich mit einer relativ großen Länge LI über eine wesentliche Höhe H des zweiten Behälterabschnitts 17. Der Rohrkörper 20 überwölbt mit einem konvexen Hüllabschnitt 26 einen Luftzuführungsraum 27 vor dem Ladeluftkühler 16. Und der Anschlussbereich 25 des Rohrkörpers 20 an den zweiten Behälterabschnitt 17 weist in etwa die Form einer Ellipse 28 -Fig. 3- auf, die über eine Länge LII des Rohrkörpers 20 durch Formänderung in einen kreisförmigen Endbereich 29 übergeht. Der Endbereich 28 des Rohrkörpers 20 ist nahe an einen Austrittsbereich 30 des Laders 5 der Abgasturboladereinrichtung 6 herangeführt. Dabei ist zwischen dem Endbereich 29 des Rohrkörpers 20 und dem Austrittsbereich 30 des Laders 5 eine Manschette 31 wirksam -Fig.5-, die bspw. aus elastischem Werkstoff besteht.

Der zweite Behälterabschnitt 17 verfügt benachbart von ersten und zweiten Endabschnitten 32 und 33 des Ladeluftkühlers 16 über nach Art von Bohrungen ausgebildete Endbereiche 34 und 35, in die Zylinderabschnitte 36 und 37 des Ladeluftkühlers 36 hineinragen. Zwischen den Endabschnitten 32 und 33 des Ladeluftkühlers 16 und den Zylinderabschnitten 36 und 37 des Ladeluftkühlers 16 sind Dichtkörper 38 und 39 vorgesehen. Außerdem sind im Ausführungsbeispiel die Endabschnitte 32 und 33 mit im Querschnitt U-förmigen Ausnehmungen 40 und 41 versehen, die die Dichtkörper 38 und 39 in axialer Richtung sichern.

Schließlich ist denkbar aus gießtechnischen Gründen am ersten Behälterabschnitt 15 der Sauganlage 9 einen Deckel 42 -Fig. 1- vorzusehen, der sich entlang einer aufrechten Begrenzungsseite 43 des ersten Behälterabschnitts 15 erstreckt und einen Innenraum 44 verschließt. Der Deckel 42 ist mit dem ersten Behälterabschnitt 15 unter Vermittlung von Schrauben 45 verbunden.

## Patentansprüche

1. Sauganlage mit einem integrierten Ladeluftkühler für eine mit einer Abgasturboladereinrichtung versehene Brennkraftmaschine der Hubkolbenbauart mit bspw. zwei Hubkolben aufnehmenden Zylindern, die Bestandteil eines Maschinengehäuses mit einem Zylindergehäuse und einem Einlasskanäle aufweisenden Zylinderkopf sind, an welche Einlasskanäle die Sauganlage mit Anschlusskanälen herangeführt ist, wobei die einen Anlagenbehälter aufweisende Sauganlage einen ersten Anschlusskanäle enthaltenden Behälterabschnitt, der mit einem zweiten den Ladeluftkühler aufnehmenden Behälterabschnitt verbunden ist, welcher zweite Behälterabschnitt an einen die Luft zum Ladeluftkühler führenden dritten Behälterabschnitt angeschlossen ist, **dadurch gekennzeichnet, dass** die Brennkraftmaschine (1) als Außenbordmotor ausgebildet ist und das Maschinengehäuse (2) über ein aufrecht stehendes Kurbelwellensystem und liegende Zylinder verfügt, wobei die durch eine Turbine (4) und einen Lader (5) gebildete Abgasturboladereinrichtung (6) an einer oberen Stirnseite (3) des Maschinengehäuses (2) angeordnet ist und dass der erste Behälterabschnitt (15), der zweite Behälterabschnitt (17) und der dritte Behälterabschnitt (18) aus einem Stück aus Leichtmetall zu einer Sauganlagenbaueinheit (19) zusammengefasst sind, welcher dritte Behälterabschnitt (18) als ein vom zweiten Behälter /17) aus in Richtung Lader (5) sich verjüngender Rohrkörper (2) dargestellt ist.

2. Sauganlage nach Anspruch 1, **dadurch gekennzeichnet, dass** z.B. die ersten und die zweite Behälterabschnitte (17 und 18) der Saugrohranlage (9) in einer horizontale Ebene (HE) gesehen zum einen mit einer Innenseite (21) mit relative geringem Abstand (Ag) an das Maschinengehäuse (2) anschließen und zum anderen mit einer Außenseite (22) benachbart einer Abdeckhaube (23) des Außenbordmotors verläuft.

3. Sauganlage nach den Ansprüchen 1 und 2, **dadurch gekennzeichnet, dass** der Ladeluftkühler (16) eine zylinderische Form aufweist, an die der zweite Behälterabschnitt (17) angepasst ist, wobei eine Tiefe (Ti) des ersten Behälterabschnitts (15) in der horizontalen Ebene (HE) gesehen annähernd an den Durchmesser (Du) des Ladeluftkühlers (16) angepasst ist.

4. Saugrohranlage nach Anspruch 1, **dadurch gekennzeichnet, dass** ein Anschlussbereich (25) des Rohrkörpers (20) des dritten Behälterabschnitts (18) an den zweiten Behälterabschnitt (17) angeschlossen ist und sich mit einer relativ großen Länge (LI) über eine wesentliche Höhe (H) des besagten zweiten Behälterabschnitts (17) erstreckt.

5. Sauganlage nach einem oder mehreren der vorangehenden Ansprüche, **dadurch gekennzeichnet, dass** der Rohrkörper (20) mit einem Hüllabschnitt (26) einen Luftzuführungsraum (27) vor dem Ladeluftkühler (16) überwölbt.

6. Sauganlage nach einem oder mehreren der vorangehenden Ansprüche, **dadurch gekennzeichnet, dass** der Anschlussbereich (25) des Rohrkörpers (20) an den zweiten Behälterabschnitt (17) in etwa die Form eine Ellipse (28) aufweist, die über eine Länge (LII) des Rohrkörpers (20) durch Formänderung in einen kreisförmigen Endbereich (29) übergeht.

7. Sauganlage nach den Ansprüchen 1 und 6, **dadurch gekennzeichnet, dass** der Endbereich (29) des Rohrkörpers (20) nahe an einen Austrittsbereich (30) des Laders (5) der Abgasturboladereinrichtung (6) herangeführt ist, wobei zwischen dem Endbereich (29) des Rohrkörpers (20) und dem Austrittsbereich (30) des Laders (5) eine bspw. elastische Manschette (31) wirksam ist.

8. Sauganlage nach einem oder mehreren der vorangehenden Ansprüche, **dadurch gekennzeichnet, dass** der zweite Behälteranschnitt (17) benachbart von ersten und zweiten Endabschnitten (32 und 33) des Ladeluftkühlers (16) über nach Art von Bohrungen ausgebildete Endbereiche (34 und 35) verfügt, in die Zylinderabschnitte (36 und 37) des Ladeluftkühlers (16) hineinragen.

9. Sauganlage nach Anspruch 8, **dadurch gekennzeichnet, dass** zwischen den Endbereichen (34 und 35) und den Zylinderabschnitten (36 und 37) Dichtkörper (38 und 39) vorgesehen sind.

10. Sauganlage nach Anspruch 9, **dadurch gekennzeichnet, dass** bspw. die Endabschnitte (32 und 33) des zweiten Behälterabschnitts (17) mit Ausnehmungen (40 und 41) zur Aufnahme der Dichtkörper (38 und 39) versehen sind.
